# EUROPÄISCHE PATENTANMELDUNG

(11) **EP 4 822 193 A1**
(43) Veröffentlichungstag der Anmeldung: **14.10.2026**
(21) Anmeldenummer: 26169113.3
(22) Anmeldetag: 30.03.2026
(51) Int. Cl.: F16B 2/00

(54) **MONTAGEELEMENT**

(30) Priorität: 11.04.2025 DE 202025102015 U
(71) Anmelder: OBO Bettermann Hungary Kft, 2347 Bugyi (HU)
(72) Erfinder: BUTZEK, Julius, 58710 Menden (DE); KARDOS, Gyula, 2040 Budaörs (HU); MAGYARI, Valentin, 2366 Kabucs (HU); TÓTH, Gabor, 2230 Gyömro (HU)
(74) Vertreter: Haverkamp Patentanwälte PartG mbB

(57) **Zusammenfassung**

Die Erfindung betrifft ein Montageelement 1, insbesondere zum Befestigen eines Nutzbauteils an einem Befestigungsgrund, welches Montageelement 1 eine Sockelstruktur 2 mit einem daran angeformten Hülsenglied 3 umfasst, dessen von einer Hülse 4 eingefasster Durchgangskanal 5 zum Durchführen eines Befestigers zum Zwecke einer Befestigung des Montagelements 1 an einem Befestigungsgrund vorgesehen ist, welches Hülsenglied 3 in radialer Richtung elastisch nachgiebige, an der Hülse 4 außenseitig angeformte Kopplungselemente zum insbesondere reibschlüssigen Einsetzen in die Gerätenase 14, 14.1 eines Setzgerätes umfasst.

Besonderes Kennzeichen ist, dass die Kopplungselemente als mit ihren freien Enden in Richtung zur Sockelstruktur 2 weisende Sperrzähne 6, 6.1 ausgeführt sind, die unter Zwischenschaltung eines Scharniers 7, 7.1 als Biegeverbindung an die Hülse 4 angeformt und durch das Scharnier 7, 7.1 gegenüber der Hülse 4 zur Reduzierung des Durchmessers des Hülsengliedes 3 im Bereich seiner Sperrzähne 6, 6.1 kippbar sind.

## Beschreibung

Die Erfindung betrifft ein Montageelement, insbesondere zum Befestigen eines Nutzbauteils an einem Befestigungsgrund, welches Montageelement eine Sockelstruktur mit einem daran angeformten Hülsenglied umfasst, dessen von einer Hülse eingefasster Durchgangskanal zum Durchführen eines Befestigers zum Zwecke einer Befestigung des Montagelements am einem Befestigungsgrund vorgesehen ist, welches Hülsenglied in radialer Richtung elastisch nachgiebige, an der Hülse außenseitig angeformte Kopplungselemente zum insbesondere reibschlüssigen Einsetzen in die Gerätenase eines Setzgerätes umfasst.

Derartige Montageelemente werden beispielsweise im Zusammenhang mit einer Verlegung von Kabeln, Rohren, Kabeltragsystemen und dergleichen eingesetzt, und zwar wenn derartige Nutzbauteile mit einem maschinellen Setzgerät an einem Befestigungsgrund, etwa einer Wand oder einer Decke befestigt werden sollen. Mit einem solchen Setzgerät werden typischerweise Nägel als Befestiger in den Befestigungsgrund eingeschossen. Ein solches Montageelement verfügt über ein Hülsenglied mit einem von einer Hülse eingefassten Durchgangskanal. Dieser dient zum Durchführen des mit einem solchen Setzgerät zu setzenden Befestigers. An die Außenseite der Hülse sind als Teil des Hülsengliedes lamellenartige Kopplungselemente angeformt. Diese ragen in tangentialer Richtung von der Hülse ab. Die freien Enden dieser Kopplungselemente sind in radialer Richtung elastisch nachgiebig. Die Kopplungselemente dienen für den Anschluss der Gerätenase eines Setzgerätes an ein solches Montageelement, und zwar indem die Gerätenase auf die in radialer Richtung elastisch nachgiebigen Kopplungselemente aufgeschoben wird. Diese wirken aufgrund ihrer Materialelastizität gegen die Innenwand der Gerätenase, sodass das Montageelemente reibschlüssig an die Gerätenase und damit an das Setzgerät angeschlossen ist. An ihrem von der Sockelstruktur wegweisenden äußeren Ende weisen diese Klemmlamellen eine Schräge auf, die als Einführschräge zum erleichterten Aufstecken der Gerätenase eines Setzgerätes dienen.

Die Montageelemente können an ihrer dem Hülsenglied gegenüberliegenden Seite an ihrer Sockelstruktur über Verbindungsstrukturen, beispielsweise clipsartige Strukturen verfügen, mit denen das Montageelement an einem Nutzbauteil angeschlossen werden kann. Bei einer solchen Anwendung des Montageelementes handelt es sich bei dem Nutzbauteil typischerweise um ein solches aus einem gegenüber dem Montageelement unterschiedlichen Material, beispielsweise einem für die Kabel- bzw. Leitungsverlegung verwendeten Stahl. Bei derartigen Nutzbauteilen handelt es sich typischerweise um Stanzbiegeteile. In anderen Ausgestaltungen ist an das Montageelement das Nutzbauteil angeformt, beispielsweise wenn dieses nach Art einer Schelle ausgelegt ist.

Für die maschinelle Befestigung eines solchen Montageelementes mit seinem Nutzbauteil an einem Befestigungsgrund wird das Montageelement in einem ersten Schritt auf das freie Ende der Gerätenase aufgesteckt. Bei diesem Vorgang werden die Klemmlamellen deformiert, damit durch deren elastische Rückstellkraft der gewünschte Reibschluss mit der Innenwand der Gerätenase bereitgestellt ist. Ist das Montageelement auf die Gerätenase aufgesetzt, wird dieses mit dem Setzgerät an den vorgesehenen Ort der Befestigung an dem Befestigungsgrund geführt und der Befestigungsvorgang am Setzgerät ausgelöst, mithin typischerweise ein Nagel in den Befestigungsgrund eingeschossen. Anschließend wird das Setzgerät mit seiner Gerätenase von dem dann montierten Montageelement abgezogen.

Derartige maschinelle Setzgeräte verfügen über eine Auslösesicherung. Die Gerätenase steht mit einer solchen Sicherung in Wirkzusammenhang und ist in längsaxialer Richtung gegenüber dieser verstellbar. Ein Auslösevorgang zum Einschießen eines Befestigers ist mit einem solchen Setzgerät erst möglich, wenn die Gerätenase um eine bestimmte Wegstrecke längsaxial in Richtung zum Setzgerät hin bewegt worden ist. Erst dann wird durch die Auslösesicherung der Auslösevorgang freigegeben. Durch diese Sicherung wird sichergestellt, dass das Setzgerät mit einem gewissen Anpressdruck auf das am Befestigungsgrund anliegende Montageelement wirkt, was suggeriert, dass der Auslösevorgang herbeigeführt werden kann.

Damit beim Anschließen der Gerätenase an das Hülsenglied eines solchen Montageelementes eine solche längsaxiale Bewegung der Gerätenase gegenüber der Auslösesicherung nicht eintritt, müssen die Kopplungselemente hinsichtlich ihrer Auslegung (plastische Nachgiebigkeit und Formgebung) sehr exakt an die Innenbemaßung einer solchen Gerätenase angepasst sein. Wenn für das Aufstecken des Montageelementes auf die Gerätenase ein zu hohes Kraftmoment aufgewendet werden muss, wird diese mit der Aufsteckbewegung entgegen der geräteseitigen Sicherung verstellt, wodurch die gewünschte Funktionalität der Auslösesicherung nicht mehr gegeben ist. Aus diesem Grunde werden von den Herstellern maschineller Setzgeräte derartige Montageelemente angeboten, die auf die Auslegung der jeweiligen Gerätenase hinsichtlich der aufzubringenden Montagekraft angepasst sind, sodass diese mit entsprechend geringer Kraftaufwendung auf die Gerätenase aufgesteckt werden können. Allerdings ist herstellerseitig sehr genau auf die einzuhaltenden Toleranzen zu achten, um dieses zu gewährleisten.

Es ist jedoch nicht unüblich, dass auf einer Baustelle maschinelle Setzgeräte unterschiedlicher Hersteller und somit auch mit unterschiedlichen Geometrien in ihrer Gerätenasen zum Einsatz kommen. Es ist dann sehr genau darauf zu achten, dass mit ein und demselben Setzgerät nur die hierfür individuell entwickelten Montageelemente benutzt werden.

Ausgehend von diesem diskutierten Stand der Technik liegt der Erfindung die Aufgabe zugrunde, ein eingangs genanntes Montageelement dergestalt weiterzubilden, dass dieses geeignet ist, unter Einhaltung der geräteseitigen Sicherungsvorkehrungen mit Setzgerätenasen mit unterschiedlichem Innendurchmesser mit einem maschinellen Setzgerät an einem Befestigungsgrund befestigt zu werden.

Gelöst wird diese Aufgabe erfindungsgemäß durch ein eingangs genanntes, gattungsgemäßes Montageelement, bei dem die Kopplungselemente als mit ihren freien Enden in Richtung zur Sockelstruktur weisende Sperrzähne ausgeführt sind, die unter Zwischenschaltung eines Scharniers als Biegeverbindung an die Hülse angeformt und durch das Scharnier gegenüber der Hülse zur Reduzierung des Durchmessers des Hülsengliedes im Bereich seiner Sperrzähne kippbar sind.

Bei diesem Montageelement sind die Kopplungselemente nach Art von mit ihrer längsaxialen Erstreckung gegenüber der Längsachse des Hülsengliedes kippbare Sperrzähnen ausgeführt. Angeformt sind die Sperrzähne an das Hülsenglied unter Ausbildung eines Scharniers, wodurch eine Biegeverbindung zwischen den Sperrzähnen und der Hülse bereitgestellt ist. Die Sperrzähne als separat zu dem Scharnier zu betrachtendes Teil der Kopplungselemente sind üblicherweise in Hülsenlängserstreckungsrichtung steifer als das Scharnier ausgebildet, damit der jeweilige Sperrzahn insgesamt gegenüber der Hülse zur Reduzierung des effektiven Durchmessers des Hülsengliedes mit seinen Sperrzähnen im Bereich seiner Sperrzähne kippbar ist. Ausgehend von dem jeweiligen Scharnier, mit dem ein Sperrzahn an das Hülsenglied angeformt ist, ist dies ausgelegt, damit dieses sowohl im Auslieferungszustand als auch in seiner Benutzungsstellung zumindest mit einem Sperrzahnabschnitt in Richtung zur Sockelstruktur weist. Die Sperrzähne schließen mit der Mantelfläche der Hülse im Auslieferungszustand des Montageelementes und damit in der Auslieferungsstellung der Sperrzähne einen größeren Winkel ein als in ihrer Stellung, wenn auf diese die Gerätenase eines maschinellen Setzgerätes aufgesteckt ist. Damit wirken die Sperrzähne widerhakenähnlich, sodass das Montageelement an die Gerätenase eines Setzgerätes mit einer deutlich geringeren Kraft angeschlossen werden kann, als für ein Abziehen des Montageelementes von einer Gerätenase erforderlich ist. Durch diese Maßnahme wird zweierlei erreicht. Zum einen können auf die im Auslieferungszustand des Montageelements typischerweise mit ihrer radial nach außen weisenden Seite über der Längsachse der Hülse in Richtung zur Sockelstruktur geneigten Sperrzähne in Gerätenasen, vor allem auch mit einem unterschiedlichen Innendurchmesser mit prinzipiell derselben Kraft aufgesteckt werden, ohne dass sich dieses auf die Qualität des Reibschlusses mit der Gerätenase auswirken würde. Infolge der widerhakenähnlichen Wirkung der Sperrzähne ist die erforderliche Abzugskraft des Montageelementes von der Gerätenase deutlich höher, sodass auf diese Weise auch Sorge dafür getragen ist, dass ein an die Gerätenase eines maschinellen Setzgerätes angeschlossenes Montageelement an dieser für den Vorgang des Handlings bis zur finalen Montage am Befestigungsgrund sicher verbleibt und nicht mit einer Hand an der Gerätenase gehalten werden muss. Eine die Montage eines solchen Montageelementes durchführende Person kann sich daher mit der für die Montage nicht benötigten Hand, wenn beispielsweise auf einer Leiter stehend, zusätzlich halten. Daher ist eine Ein-Hand-Montage, nachdem das Montageelement an die Gerätenase angeschlossen ist, mit solchen Montageelementen ohne weiteres möglich, vor allem auch dann, wenn das Montageelement bereits an ein im Vergleich zum Gewicht des Montageelementes deutlich höhergewichtiges Nutzbauteil angeschlossen ist und somit mit dem Montageelement auch das Nutzbauteil gehandhabt werden muss. Ist das Montageelement an den Befestigungsgrund angeschlossen, kann durchaus eine höhere Kraft aufgewendet werden, um die Befestigungsnase von dem Montageelement abzuziehen.

Vorzugsweise nimmt der Außendurchmesser des Hülsengliedes im Bereich seiner Sperrzähne in der Auslieferungsstellung der Sperrzähne des Montageelementes in Richtung zu dem freien, zur Sockelstruktur weisenden Ende hin zu. Der zwischen den Sperrzähnen und der Mantelfläche der Hülse eingeschlossene Winkel ist typischerweise deutlich kleiner als 90 Grad. Je nach Ausgestaltung der Sperrzähne beträgt dieser 45 Grad oder weniger.

Ein solcher Sperrzahn kann auch dergestalt ausgelegt sein, dass sich an den vorbeschriebenen Sperrzahnabschnitt ein ausgehend von dem Scharnier in die andere Richtung erstreckender Abschnitt anschließt. Dieser weitere Sperrzahnabschnitt hat typischerweise eine deutlich geringere Erstreckung als der zuvor angesprochene. Diese Angaben beziehen sich auf das Montageelement mit seinen Sperrzähnen in Auslieferungsstellung.

Besonders vorteilhaft ist eine Ausgestaltung der Sperrzähne, wenn diese nach Art von Exzentern ausgelegt sind und die in radialer Richtung nach außen weisende Oberfläche in Richtung der Längsachse des Hülsengliedes gekrümmt ist. Die Achse, um die die nach außen weisenden Oberfläche der Sperrzähne gekrümmt ist, verläuft sodann quer zur Längsachse des Hülsengliedes. Das bedeutet: Die Anlage- bzw. Kontaktfläche der Innenwand einer Gerätenase an den Sperrzähnen ist in Abhängigkeit von dem Innendurchmesser der Gerätenase und somit in Abhängigkeit von dem Kippwinkelbetrag der Sperrzähne ausgehend von ihrem Auslieferungszustand in axialer Richtung gegenüber dem Scharnier des jeweiligen Kopplungselementes unterschiedlich. Dieses hat zum Vorteil, dass ein Aufstecken der Gerätenase erleichtert ist, da der obere Abschnitt der Sperrzähne dann als Einführschräge genutzt wird. Maßgeblich ist jedoch, dass hierdurch das Montageelement, vor allem wenn an dieses bereits ein Nutzbauteil zur Montage auf dem Befestigungsgrund angeschlossen ist, mit hinreichender Haltekraft an die Gerätenase angeschlossen ist. Liegt nämlich eine Zuglast an dem Montageelement gegenüber der Gerätenase an, sind die Sperrzähne bestrebt aufgrund ihrer Krümmung und der exzentrischen bzw. in Bezug auf die Längserstreckung eines Sperrzahnes außermittig angeordnete Biegeverbindung an der Innenwand der Gerätenase abzuwälzen. Diese sind in einem solchen Fall bestrebt, sich zu spreizen. Auf diese Weise wird mit zunehmender Zuglast die Kraft des Reibschlusses erhöht. Es versteht sich, dass bei Überschreiten einer gewissen Lösekraft die Gerätenase von dem Hülsenglied mit seinen Spreizzähnen abgezogen werden kann. Die Lösekraft ist zum sicheren Halten des Montageelementes an der Gerätenase deutlich höher als die zum Einführen des Hülsengliedes des Montageelementes in die Gerätenase. Bei einer solchen Auslegung der Sperrzähne ist es vorteilhaft, wenn der Krümmungsradius der längsaxialen Krümmung ausgehend von einem zur Sockelstruktur weisenden Endabschnitt in Richtung zu dem Scharnieranschluss an die Hülse hin abnimmt.

In einer weiteren bevorzugten Ausgestaltung ist vorgesehen, dass die in radiale Richtung nach außen weisende Oberfläche der Sperrzähne auch in Umfangsrichtung des Hülsengliedes gekrümmt ist. Hierdurch erfolgt eine bessere Anpassung an die zylindrische Innenkontur einer Gerätenase. Diese Krümmung an der Außenseite der Sperrzähne ist in einer Weiterbildung nicht konstant. Vielmehr ist vorzugsweise vorgesehen, dass der Krümmungsradius in einem mittleren Abschnitt der Sperrzähne größer ist als in den daran in Umfangsrichtung des Hülsengliedes gesehen benachbarten Abschnitten. Typischerweise nimmt der Krümmungsradius in diesen zu dem mittleren Abschnitt benachbarten Abschnitten sukzessive ab.

Das Scharnier, mit dem jeder Sperrzahn an die Hülse angeschlossen bzw. angeformt ist, ist die Biegeverbindung typischerweise nach Art eines Filmscharniers ausgeführt. Die Steifigkeit der Biegeverbindung lässt sich beispielsweise über die Materialstärke des Scharniers und ihre Erstreckung in Umfangsrichtung der Hülse und/oder durch entsprechende Strukturen einstellen. Eine gewisse Steifigkeit, die durchaus gewünscht ist, kann dadurch erreicht werden, dass das Scharnier dem Krümmungsverlauf auf der Außenseite der Hülse über eine gewisse Erstreckung folgt. Dies gewährleistet, dass sich die Sperrzähne auch bei einer Handhabung des Montageelementes in ihrer Auslieferungsstellung verbleiben, bis diese auf das freie Ende einer Gerätenase aufgesteckt werden.

Im Unterschied zu der Auslegung der Kopplungselemente vorbekannter Montageelemente mit ihren zahlreichen lamellenartigen Klemmelementen ist es beim Gegenstand dieses Montageelementes grundsätzlich ausreichend, wenn nur zwei einander bezüglich der Längsachse der Hülse diametral gegenüberliegende Sperrzähne vorgesehen sind. Eine Zentrierung folgt dann selbsttätig. Bei im Durchmesser größeren Hülsengliedern können, wenn die Sperrzähne nur eine geringe Umfangserstreckung aufweisen, auch drei oder mehr Sperrzähne dieser Art verwendet werden.

Die vorbeschriebene Verstellbarkeit der Sperrzähne gegenüber der Hülse wirkt sich naturgemäß auch bei Toleranzungenauigkeiten bei der Herstellung aus, sodass die Montageelemente in Bezug auf die Bemaßung der Innenwandung einer Gerätenase mit deutlich geringeren Toleranzen hergestellt werden können.

In Abhängigkeit von der längsaxialen Erstreckung der Sperrzähne können vom Innendurchmesser her unterschiedlichste Gerätenasen zum Befestigen eines solchen Montageelementes an einem Befestigungsgrund, wie etwa einer Wand genutzt werden. Da bei einem solchen Montageelement die Höhe des Hülsengliedes begrenzt ist und die Sperrzähne innerhalb einer Gerätenase bis in eine bestimmte Einsatztiefe eingebracht werden sollen, können die Sperrzähne in aller Regel nicht beliebig lang ausgeführt werden. In einem solchen Fall ist die Verwendung des Montageelementes zum Einsetzen seines Hülsengliedes in vom Durchmesser her unterschiedliche Gerätenasen begrenzt. Daher ist in einem Ausführungsbeispiel vorgesehen, dass das Montageelement zusätzlich zu dem vorbeschriebenen Hülsenglied mit seinen als Kopplungselementen dienenden Sperrzähnen mit radialem Abstand zur Hülse mehrere, als Verklammerungsarme ausgebildete und von derselben Seite der Sockelstruktur wie das Hülsenglied abragende und in radialer Richtung elastisch nachgiebige Kopplungselemente trägt. Diese dienen zum reibschlüssigen Kontaktieren der äußeren Mantelfläche einer Gerätenase. Dieser Anschluss kann in längsaxialer Richtung reibschlüssig und/oder durch einen geringen Formschluss bereitgestellt sein. Letzteres setzt voraus, dass das Anschließen des Montageelementes an die Gerätenase mit entsprechend geringer Kraft erfolgen kann. Die Verklammerungsarme sind vorzugsweise gegenüber der Längsachse des Hülsengliedes um einige Winkelgrade angestellt. Bei einer solchen Ausgestaltung ist je nach Auslegung des Montageelementes bzw. des Innendurchmessers der Gerätenase eine Kontaktierung der Innenwand der Gerätenase durch die Sperrzähne und zusätzlich durch die vorbeschriebenen Verklammerungsarme möglich.

Ein solches Montageelement kann das Nutzbauteil selbst tragen. Beispielsweise kann dieses an das Montageelement angeformt sein. In anderen Ausgestaltungen verfügt das Montageelement an seiner dem Hülsenglied gegenüberliegenden Seite der Sockelstruktur über ein oder mehrere Verriegelungselemente, mit denen das Montageelement an ein Nutzbauteil, beispielsweise ein Metallteil wie eine Sammelhalterung oder dergleichen angeschlossen werden kann. Ein solcher Anschluss kann beispielsweise vorgesehen sein, wie dieses in DE 20 2023 104 074 U1 der Anmelderin beschrieben ist. Selbstverständlich können auch andere Verriegelungselemente, beispielsweise Clipsverbindungen oder Steck-Dreh-Verbindungen zwischen dem Montageelement und dem Nutzbauteil verwendet werden.

Nachfolgend ist die Erfindung anhand eines Ausführungsbeispiels und unter Bezugnahme auf die beiliegenden Figuren beschrieben. Es zeigen:
- **Fig. 1:**: Eine perspektivische Ansicht eines erfindungsgemäßen Montageelementes mit Blickrichtung auf seine Oberseite,
- **Fig. 2:**: eine perspektivische Darstellung des Montageelementes der Figur 1 mit Blick auf die Unterseite desselben,
- **Fig. 3:**: eine Seitenansicht des Montageelementes der Figuren 1 und 2,
- **Fig. 4:**: eine Draufsicht auf die Oberseite des Montageelementes der vorstehenden Figuren,
- **Fig. 5:**: eine weitere Seitenansicht des Montageelementes der vorstehenden Figuren,
- **Fig. 6:**: das Montageelement der vorstehenden Figuren, angeschlossen an eine erste Gerätenase eines maschinellen Setzgerätes, und
- **Fig. 7:**: eine Darstellung des Montageelementes, angeschlossen an eine bezüglich ihrer Bemaßung anders ausgelegten Gerätenase eines maschinellen Setzgerätes.

Ein Montageelement 1 dient zum Befestigen eines in den Figuren nicht näher dargestellten Nutzbauteil an einem Befestigungsgrund, beispielsweise einer Wand oder einer Decke. Als Nutzbauteil, welches mit einem oder mehreren der dargestellten Montageelemente 1 zu befestigen ist, kann sich beispielsweise um Teile einer Kabelführungs- bzw. Kabelleitungsstruktur handeln. Bei dem Montageelement 1 handelt es sich um ein Kunststoffspritzgussteil.

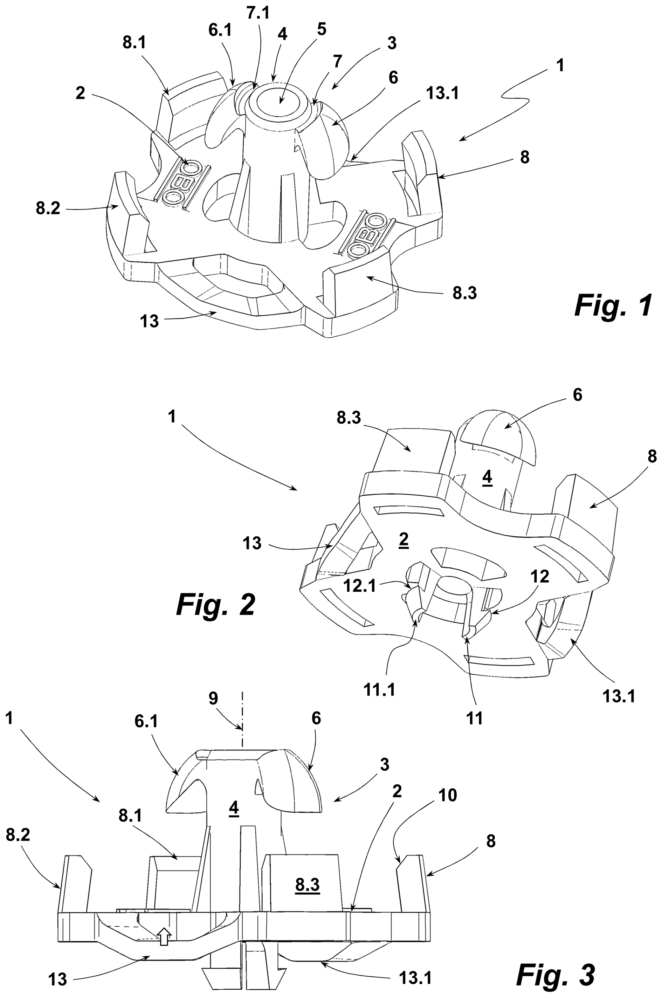

Das Montageelement 1 verfügt über eine Sockelstruktur 2, die bei dem dargestellten Ausführungsbeispiel nach Art einer Grundplatte ausgelegt ist. Die Sockelstruktur 2 trägt an ihrer in Figur 1 erkennbaren Oberseite ein insgesamt mit dem Bezugszeichen 3 gekennzeichnetes Hülsenglied. Das Hülsenglied 3 umfasst eine Hülse 4, die die Sockelstruktur 2 durchgreift. Die Hülse 4 fasst einen Durchgangskanal 5 ein, der für die Durchführung eines Befestigers, typischerweise eines Nagelbefestigers, wie beispielsweise eines Betonnagels vorgesehen ist. Die Hülse 4 ist an die Sockelstruktur 2 angeformt. Die Hülse 4 trägt zur Komplettierung des Hülsengliedes 3 an ihrem oberen Endabschnitt zwei einander bezüglich der Längsachse der Hülse 4 diametral gegenüberliegende Sperrzähne 6, 6.1. Die Sperrzähne 6, 6.1 sind nach Art von Exzentern konzipiert und in der in den Figuren 1 bis 5 gezeigten Auslieferungsstellung mit ihrer in radialer Richtung nach außen weisenden Seite in Richtung zur Sockelstruktur 2 geneigt. Angebunden sind die Sperrzähne 6, 6.1 an die Hülse 4 durch jeweils ein Scharnier 7, 7.1. Die Scharniere 7, 7.1 sind nach Art eines Filmscharniers als Biegeverbindung ausgelegt, sodass die Sperrzähne 6, 6.1 über die Biegeverbindung an die Hülse 4 angeformt sind. Die in radiale Richtung nach außen weisende Oberfläche der Sperrzähne 6, 6.1 ist sowohl in Richtung der Längsachse 9 der Hülse 4 als auch in Umfangsrichtung gekrümmt.

An die Sockelstruktur 2 sind auf derselben Seite wie das Hülsenglied 3 vier Verklammerungsarme 8, 8.1, 8.2, 8.3 angeformt. Diese sind, wie aus der Seitenansicht der Figur 3 erkennbar, gegenüber der Längsachse 9 der Hülse 4 mit geringen Winkelgraden (bei dem dargestellten Ausführungsbeispiel etwa 6 Grad) an ihrer zu dem Hülsenglied 3 weisenden Seite angestellt. Die zum Hülsenglied 3 weisende obere Kante der Verklammerungsarme 8, 8.1, 8.2, 8.3 ist zur Bereitstellung einer Montageschräge 10 an jedem Verklammerungsarm 8, 8.1, 8.2, 8.3 gebrochen.

Wie aus den Figuren 2 und 3, die einen Blick auf die Unterseite der Sockelstruktur 2 gestatten, zu erkennen, trägt diese an ihrer Unterseite zwei Clipsarme 11, 11.1. Diese dienen dem Zweck einer Verriegelung des Montageelementes 1 an einem Nutzbauteil, welches zu diesem Zweck eine komplementäre Montageöffnung aufweist, in die die Clipsarme 11, 11.1 eingeführt und mit ihren Rastvorsprüngen 12, 12.1 die Durchbrechung hintergreifen. Die Clipsarme 11, 11.1 sind in Verlängerung der Hülse 4 konzipiert. Die Krümmung der Innenwand der Hülse 4 setzt sich in den zueinander weisenden Seiten der Clipsarme 11, 11.1 fort.

Um einen spielfreien Anschluss des Montageelementes 1 an ein Nutzbauteil zu gewährleisten, verfügt die Sockelstruktur 2 über zwei Spannarme 13, 13.1. Wie aus Figur 3 erkennbar, sind diese randlich an die Sockelstruktur 2 angeformt und erstrecken sich in ihrem mittleren Abschnitt in Richtung der Längsachse 9 über die Unterseite der Sockelstruktur 2 hinaus. Bei einem Anschluss des Montageelementes mittels seiner Clipsarme 11, 11.1 an ein Nutzbauteil werden die Spannarme 13, 13.1 in Abhängigkeit von der Materialstärke des Nutzbauteils mehr oder weniger weit in Richtung des in Figur 3 zu dem Spannarm 13 eingezeichneten Blockpfeil verstellt, sodass die Rastverbindung mit dem Nutzbauteil unter Vorspannung gestellt ist.

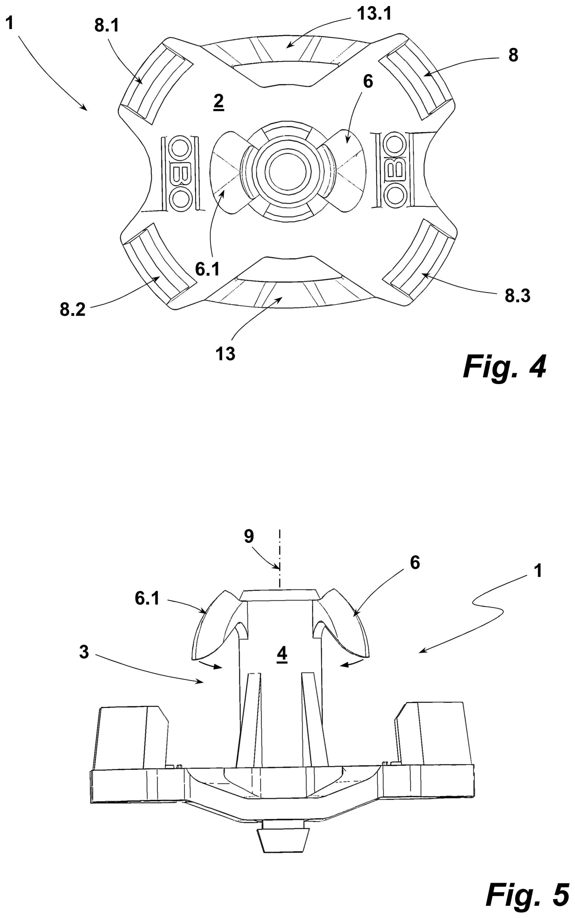

In der Draufsicht auf das Montageelement 1 der Figur 4 ist die bereits vorstehend angesprochene Wölbung der Sperrzähne 6, 6.1 in Umfangsrichtung des Hülsengliedes 3 erkennbar. In Umfangsrichtung ist die Wölbung in einem mittleren Abschnitt mit gleichbleibendem Krümmungsradius ausgeführt, der in den beiden daran in Umfangsrichtung angrenzenden Abschnitten zunehmend reduziert ist. Die Sockelstruktur 2 verfügt ferner über zwei einander diametral zum Hülsenglied 3 gegenüberliegende Griffmulden zur Handhabung des Montageelementes 1. Diese befinden sich mit radialem Abstand zu den Sperrzähnen 6, 6.1.

Die Krümmung der Sperrzähne 6, 6.1 in Richtung der Längsachse 9 ist hingegen in der Seitenansicht des Montageelementes 1 in der Figur 5 gut zu erkennen. Der Abschnitt mit dem kleinsten Krümmungsradius befindet sich in den Sperrzähnen 6, 6.1 in dem in Figur 5 gezeigten jeweils unteren Abschnitt. Dieses ist der Auslieferungsstatus bzw. der Auslieferungsstellung der Sperrzähne 6, 6.1 des Montageelementes 1. Die Außenseiten der Sperrzähne 6, 6.1 in ihrem oberen Abschnitt wirken als Einführschräge zum Aufsetzen der Gerätenase eines maschinellen Setzgerätes. Aufgrund der durch die Scharniere 7, 7.1 zwischen den Sperrzähnen 6, 6.1 und der Hülse 4 gebildeten Biegeverbindung werden diese, wie durch die Pfeile in Figur 5 angedeutet, gegenüber der Hülse 4 verkippt. Dieses geschieht bei Verwendung einer Gerätenase, deren Innendurchmesser kleiner ist als der maximale Durchmesser des Hülsengliedes 3 im Bereich seiner Sperrzähne 6, 6.1 in der Auslieferungsstellung.

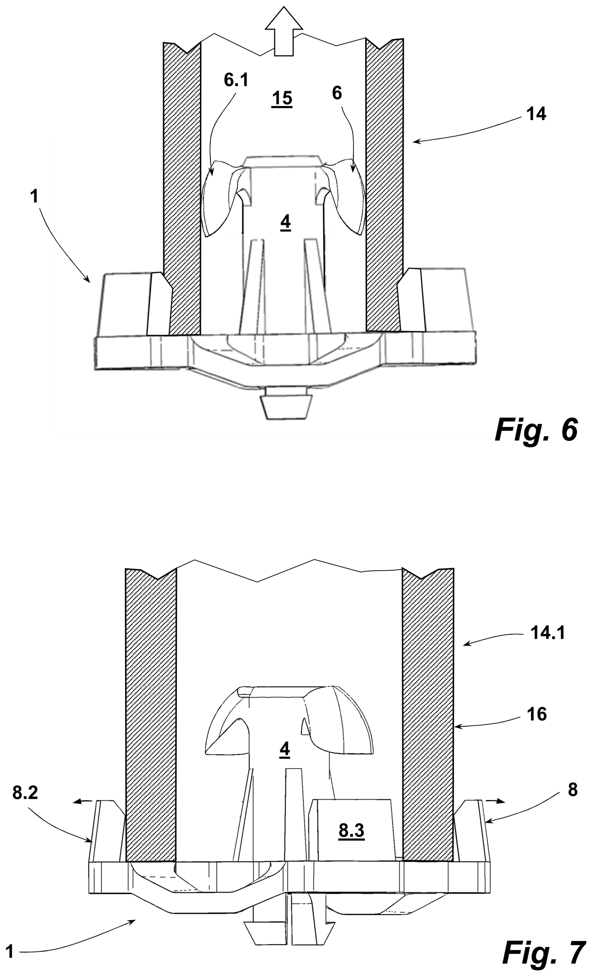

Figur 6 zeigt das Montageelement 1, welches mit seinem Hülsenglied 3 in die Mündung einer Gerätenase 14 eines im Übrigen nicht näher dargestellten maschinellen Setzgerätes eingesetzt worden ist. Im Zuge des Einsetzvorganges sind die beiden Sperrzähne 6, 6.1 in der vorbeschriebenen Richtung gegenüber der Hülse 4 verkippt. Hierzu wurde aufgrund der durch die Scharniere 7, 7.1 bereitgestellten Biegeverbindung nur eine geringe Kraft benötigt. Jedenfalls ist eine Montage des Montageelementes 1 auf die Gerätenase 14 ohne Weiteres mit einer Kraft möglich, die signifikant kleiner ist als diejenige Kraft ist, die benötigt wird, um die Gerätenase 14, wie durch den Blockpfeil in Figur 6 angedeutet, gegenüber einer Auslösesicherung zu verstellen. Die hierfür erforderliche Kraft trägt 20 N. Die Montagekraft zum Aufsetzen des Montageelementes 1 auf die Gerätenase 14 beträgt bei dem dargestellten Ausführungsbeispiel signifikant weniger als 20 N, damit sichergestellt ist, dass beim Aufstecken des Montageelementes 1 die Gerätenase 14 nicht translatorisch verstellt wird.

Wirkt hingegen auf das Montageelement 1 gegenüber der Gerätenase 14 eine Zugkraft, so ist das Montageelement 1 zusammen mit seinem Nutzbauteil sicher an der Gerätenase 14 gehalten, da die mit ihrer radialen Außenseite exzentrisch ausgeführten Sperrzähne 6, 6.1 in einem solchen Fall bestrebt sind, an der Innenwand 15 der Gerätenase 14 abzuwälzen, was eine Spreizbewegung zur Folge hat und wodurch sich der Reibschluss mit der Gerätenase 14 verstärkt. Dies gewährleistet einen sicheren Anschluss des Montageelementes 1 samt Nutzbauteil an der Gerätenase 14. Ist das Montageelement 1 mit seinem Nutzbauteil an einem Befestigungsgrund, wie beispielsweise einer Wand nach Auslösen des maschinellen Setzgerätes befestigt, kann dieses mit seiner Gerätenase von dem Montageelement gezogen werden.

Figur 7 zeigt das Montageelement 1, welches an eine andere Gerätenase 14.1 angeschlossen ist. Die Gerätenase 14.1 weist einen größeren Innendurchmesser auf, weshalb nunmehr die Verklammerungsarme 8, 8.1, 8.2, 8.3 zum Einsatz kommen. Diese kontaktieren die äußere Mantelfläche 16 der Gerätenase 14.1 und stehen unter Vorspannung, da diese beim Aufstecken auf die Gerätenase 14.1, wie in Figur 7 durch Pfeile angedeutet, in radialer Richtung nach außen elastisch nachgiebig verstellt worden sind.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Montageelement
- 2: Sockelstruktur
- 3: Hülsenglied
- 4: Hülse
- 5: Durchgangskanal
- 6, 6.1: Sperrzahn
- 7, 7.1: Scharnier
- 8, 8.1, 8.2, 8.3: Verklammerungsarm
- 9: Längsachse
- 10: Montageschräge
- 11, 11.1: Clipsarm
- 12, 12.1: Rastvorsprung
- 13, 13.1: Spannarm
- 14, 14.1: Gerätenase
- 15: Innenwand
- 16: äußere Mantelfläche

## Patentansprüche

1. Montageelement, insbesondere zum Befestigen eines Nutzbauteils an einem Befestigungsgrund, welches Montageelement (1) eine Sockelstruktur (2) mit einem daran angeformten Hülsenglied (3) umfasst, dessen von einer Hülse (4) eingefasster Durchgangskanal (5) zum Durchführen eines Befestigers zum Zwecke einer Befestigung des Montagelements (1) an einem Befestigungsgrund vorgesehen ist, welches Hülsenglied (3) in radialer Richtung elastisch nachgiebige, an der Hülse (4) außenseitig angeformte Kopplungselemente zum insbesondere reibschlüssigen Einsetzen in die Gerätenase (14, 14.1) eines Setzgerätes umfasst, **dadurch gekennzeichnet, dass** die Kopplungselemente als mit ihren freien Enden in Richtung zur Sockelstruktur (2) weisende Sperrzähne (6, 6.1) ausgeführt sind, die unter Zwischenschaltung eines Scharniers (7, 7.1) als Biegeverbindung an die Hülse (4) angeformt und durch das Scharnier (7, 7.1) gegenüber der Hülse (4) zur Reduzierung des Durchmessers des Hülsengliedes (3) im Bereich seiner Sperrzähne (6, 6.1) kippbar sind.

2. Montageelement nach Anspruch 1, **dadurch gekennzeichnet, dass** der Außendurchmesser des Hülsengliedes (3) im Bereich seiner Sperrzähne (6, 6.1) in der Auslieferungsstellung des Montageelementes (1) in Richtung zu dem freien, zur Sockelstruktur (2) weisenden Ende hin zunimmt.

3. Montageelement nach Anspruch 1 oder 2, **dadurch gekennzeichnet, dass** die in radialer Richtung nach außen weisende Oberfläche der Sperrzähne (6, 6.1) in Richtung der Längsachse (9) des Hülsengliedes (3) gekrümmt ist.

4. Montageelement nach Anspruch 3, **dadurch gekennzeichnet, dass** der Krümmungsradius der längsaxialen Krümmung ausgehend von einem zur Sockelstruktur (2) weisenden Endabschnitt (4) in Richtung zu dem von der Sockelstruktur (2) wegweisenden Endabschnitt der Sperrzähne (6, 6.1) abnimmt.

5. Montageelement nach einem der Ansprüche 1 bis 4, **dadurch gekennzeichnet, dass** die in radiale Richtung nach außen weisende Oberfläche der Sperrzähne (6, 6.1) in Umfangsrichtung des Hülsengliedes (3) gekrümmt ist.

6. Montageelement nach Anspruch 5, **dadurch gekennzeichnet, dass** der Krümmungsradius der Krümmung in Umfangsrichtung in einem mittleren Abschnitt der Sperrzähne (6, 6.1) größer ist als in den dazu benachbarten Abschnitten.

7. Montageelement nach Anspruch 6, **dadurch gekennzeichnet, dass** der Krümmungsradius in den zu dem mittleren Abschnitt benachbarten Abschnitten sukzessive abnimmt.

8. Montageelement nach einem der Ansprüche 1 bis 7, **dadurch gekennzeichnet, dass** das Scharnier (7, 7.1), mit dem jeder Sperrzahn (6, 6.1) an die Hülse angeschlossen ist, als Filmscharnier ausgeführt ist.

9. Montageelement nach Anspruch 8, **dadurch gekennzeichnet, dass** das Scharnier (7, 7.1) dem Krümmungsverlauf der Außenseite der Hülse (4) in Umfangsrichtung derselben folgt.

10. Montageelement nach einem der Ansprüche 1 bis 9, **dadurch gekennzeichnet, dass** das Hülsenglied (3) zwei einander diametral zur Längsachse (9) gegenüberliegende Sperrzähne (6, 6.1) aufweist.

11. Montageelement nach einem der Ansprüche 1 bis 10, **dadurch gekennzeichnet, dass** die Sockelstruktur (2) mit radialem Abstand zu dem Hülsenglied (3) mehrere, als Verklammerungsarme (8, 8.1, 8.2, 8.3) ausgebildete, von derselben Seite der Sockelstruktur (2) wie das Hülsenglied (3) abragende und in radialer Richtung elastisch nachgiebige Kopplungselemente zum insbesondere reibschlüssigen Kontaktieren der äußeren Mantelfläche (16) einer Gerätenase (14.1) trägt.

12. Montageelement nach Anspruch 11, **dadurch gekennzeichnet, dass** die Verklammerungsarme (8, 8.1, 8.2, 8.3) ausgehend von ihrer Basis an der Sockelstruktur (2) gegenüber der Längsachse (9) des Hülsengliedes (3) um einige Winkelgrade in Richtung zu dem Hülsenglied (3) angestellt sind.

13. Montageelement nach einem der Ansprüche 1 bis 12, **dadurch gekennzeichnet, dass** die Sockelstruktur (2) an ihrer dem Hülsenglied (3) gegenüberliegenden Seite ein oder mehrere Verriegelungselemente (11, 11.1) zum formschlüssigen Anschließen des Montageelementes (1) an ein Nutzbauteil trägt.

14. Montageelement nach einem der Ansprüche 1 bis 13, **dadurch gekennzeichnet, dass** das Montageelement (1) ein Kunststoffteil, hergestellt insbesondere im Wege eines Spritzgussprozesses ist.
